(19) Europäisches Patentamt
European Patent Office
Office européen des brevets

(11) **EP 2 787 775 A1**

(12) **EUROPEAN PATENT APPLICATION**

(43) Date of publication:
08.10.2014 Bulletin 2014/41

(51) Int Cl.:
*H04W 52/02* (2009.01)

(21) Application number: 13162021.3

(22) Date of filing: 02.04.2013

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: **NTT Docomo, Inc.**
**Tokyo 100-6150 (JP)**

(72) Inventors:
• **Ternon, Emmanuel**
**80639 München (DE)**

• **Hu, Liang**
**80339 München (DE)**
• **Agyapong, Patrick**
**81243 Munchen (DE)**
• **Taoka, Hidekazu**
**81669 München (DE)**

(74) Representative: **Zimmermann, Tankred Klaus**
**Schoppe, Zimmermann**
**Stöckeler & Zinkler & Partner**
**Patentanwälte**
**Postfach 246**
**82043 Pullach bei München (DE)**

(54) **Method and apparatus for controlling an operational state of a user plane base station, user plane base station, control plane base station, and wireless communication system**

(57) A method for controlling an operational state of a user plane base station in a wireless communication system is described. The wireless communication system includes a control plane base station having a coverage area including a plurality of user plane base stations. The user plane base station is turned off when a first condition on a carried traffic in a coverage area of the user plane base station and a second condition on a number of mobile users in the coverage area of the user plane base station is fulfilled.

FIG 7

**Description**

The present invention relates to the field of wireless communication networks, especially to the field of wireless communication systems including control/user-plane separated networks. Embodiments of the invention relate to a method and to an apparatus for controlling an operational state of a user plane base station, to a control plane base station, to a user plane base station and to a wireless communication system.

In a wireless communication system including, e.g., an heterogeneous network as radio access network control signals and user data signals may be separated into two distinct overlaid networks, the so-called control/user-plane separated networks or C/U-plane separated networks.

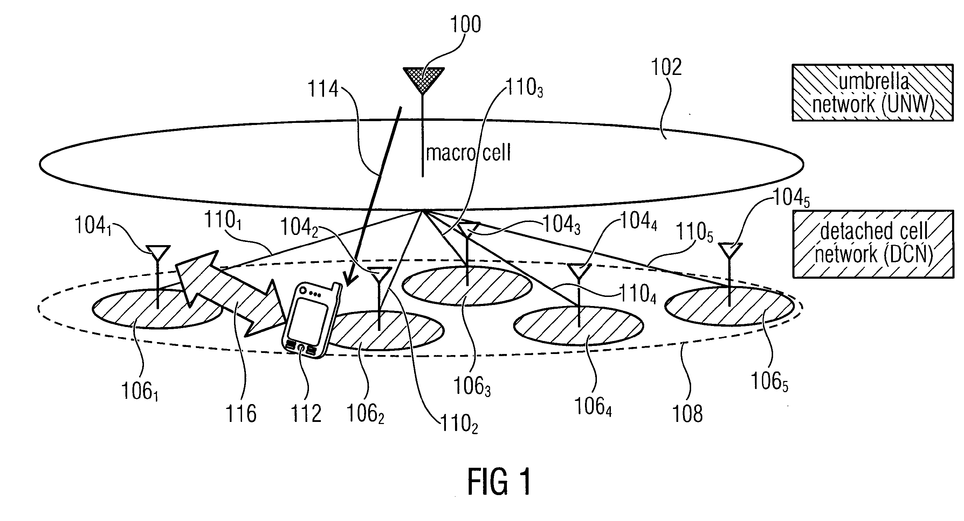

Fig. 1 shows the general structure of a C/U-plane separated network. The C/U-plane separated network comprises an umbrella network (UNW) including one or more control plane base stations (C-plane BSs). Fig. 1 schematically shows a single control plane base station or C-plane BS 100. The C-plane BS 100 may be the base station of a macro cell or of a micro cell. Fig. 1 shows a structure where the C-plane BS 100 is a base station of a macro cell. These cells operate in currently existing frequency bands, for example in the 2 Gigahertz frequency band, using currently standardized systems like LTE/LTE-A and also guarantee backwards compatibility for legacy mobile stations (MSs), i.e., such mobile stations which just support the current standards. The C-plane BS 100 has a coverage area 102 also referred to as the C-plane. The C/U-plane separated network further comprise a detached cell network (DCN) comprising a plurality of user plane base stations or U-plane BSs $104_1$ to $104_5$ each having associated therewith respective coverage areas $106_1$ to $106_5$ defining user-cells or U-cells. The U-cells $106_1$ to $106_5$ form the U-plane or user plane 108 of the C/U-plane separated network. The U-cells $106_1$ to $106_5$ are smaller than the coverage area 102 of the macro cell. The DCN comprises several U-plane BSs $104_1$ to $104_5$ defining the smaller or U-cells $106_1$ to $106_5$ that may operate in frequency bands different from the frequency bands used in the macro cell or the umbrella network, for example in higher frequency bands, like the 3-5 Gigahertz band. The U-cells $106_1$ to $106_5$ are connected to the umbrella network through respective backhaul links $110_1$ to $110_5$. Fig. 1 further shows a mobile station 112 receiving control signals from the macro cell 100 as is schematically depicted by arrow 114 and that communicates user data signals via one of the U-cells, in the example of Fig. 1, via the U-plane BS as is depicted by arrow 116.

A mobile station (MS) may be connected to the network depicted in Fig. 1 using one of several modes, e.g. using a legacy mode or a detached cell (DC) mode. In the legacy mode the umbrella network takes care of the transmission of both control signals and user data signals (C+U transmission). This mode is used either to support legacy MSs, or to support a low number of newer MSs having very high mobility or having lower data rate requirements. In this mode, the detached cell network is not used. In the DC mode the umbrella network is responsible for the C-plane communication, i.e. the transmission of control signals (C transmission), and the detached cell network is responsible for the U-plane communication, i.e. the transmission of user data signals (U transmission). The U-plane BSs are switched on only when necessary. Legacy mobile stations do not support this mode, and therefore connect to the network only via the legacy mode.

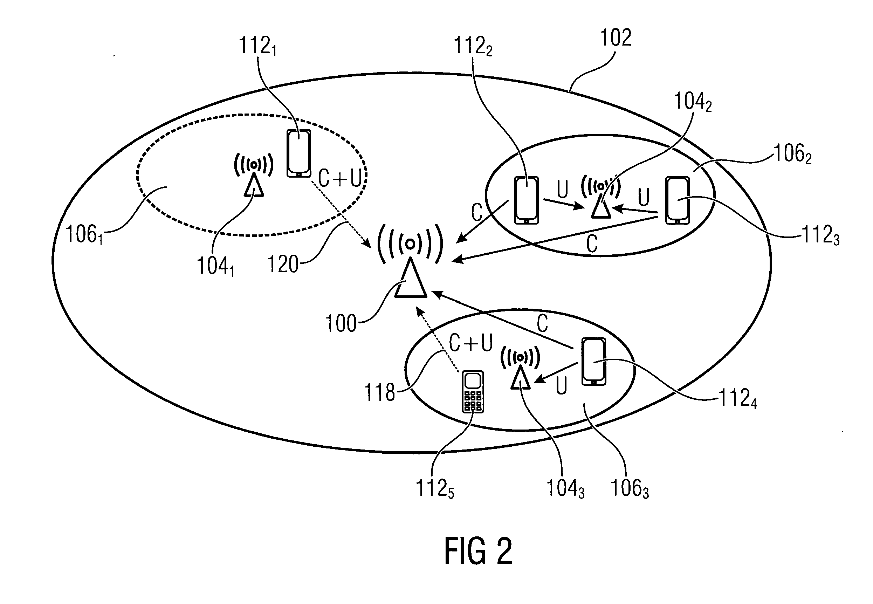

Fig. 2 shows a diagram indicating the available operating modes for different mobile users. In Fig. 2 shows the C-plane BS 100 defining by its coverage area 102 the C-plane. Other than in Fig. 1, only three U-plane BSs $104_1$ to $104_3$ are shown together with the coverage areas $106_1$ to $106_3$. In Fig. 2 a plurality of mobile stations or mobile users $112_1$ to $112_4$ are shown of which the mobile station $112_1$ is in the coverage area $106_1$ of the U-plane BS $104_1$. Mobile stations $112_2$ and $112_3$ are within the coverage area $106_2$ of the U-plane BS $104_2$, and the mobile stations $112_4$ and $112_5$ are within the coverage area $106_3$ of the U-plane BS $104_3$. Of the depicted mobile stations $112_1$ to $112_5$, it is assumed that mobile stations $112_1$ to $112_4$ are mobile stations which, when compared to mobile station $112_5$, are newer, i.e., these mobile stations support both the legacy mode and the detached cell mode. Contrary to mobile stations $112_1$ to $112_4$ the "older" mobile station $112_5$ only supports the legacy mode, i.e., it cannot connect to one of the U-plane BSs so that both control signal and user data signal transmission is carried out via the umbrella network, as indicated by the arrow 118 indicating the C+U communication between the C-plane BS 100 and the mobile station $112_5$. Thus, the legacy mobile station $112_5$ always operates in the legacy mode, even in case a U-plane BS $104_3$ is available for connection.

The mobile stations $112_2$ to $112_4$ operate in the detached cell mode, i.e., these mobile stations communicate with the C-plane BS 100 of the umbrella network for control signal communication, as is indicated by the arrows labeled "C". Data signal communication, however, is between the respective mobile stations $112_2$ to $112_4$ and the respective U-plane BSs $104_2$ and $104_3$, as is indicated by the arrows labeled "U". Thus, newer MSs can either work in the detached cell mode when the U-plane BS is on, or in the legacy mode, for example when the mobile station has a very high mobility or a low data rate requirement.

In wireless communication networks in general and also in networks as they are shown in Fig. 1 and in Fig. 2, energy savings and energy efficiency are of specific interest. For achieving such savings and efficiency, one or more of the U-plane BSs may be put to sleep or may be turned off when not in use. In Fig. 2 it is assumed that, e.g. for saving energy, the U-plane BS $104_1$ is in its off-state, as is indicated by the dotted line. In such a case the mobile station $112_1$ cannot set up a separated C communication and U communication, rather, it needs to connect for a C+U communication directly with a C-plane BS 100.

In the "ON" state the U-plane BS is fully on and sends both user data to connected mobile stations and pilot symbols to enable new mobile stations to connect. The pilot symbols may be sent by the U-plane BSs enable the users to differentiate each U-plane BS and to measure the channel quality between them and the U-plane BSs.

In the "SLEEP" state the U-plane BS is in a stand-by mode in which it can neither send nor receive any signals and consumes a non-negligible amount of power, however, it can be woken up by the C-plane BS almost instantly, for example within a millisecond, by appropriate signaling via the backhaul link 110.

In the "OFF" state the U-plane BS is rendered completely non-operational and consumes a negligible amount of power.

Turning off a base station is a very quick operation, it happens almost instantaneously. However, turning it on again (from the off state) may be a lengthy process which can last up to five to thirty minutes depending on the type of base station. Thus, turning a U-plane BS completely off has numerous advantages in terms of energy savings and inter-cell interferences reduction. However, turning the U-plan BS back on again takes a substantial amount of time due to the activation delay generated by some components of the U-plane BS, such as the cooling system or the digital signal processing (DSP) components, for example for base band (BB) processing. This activation delay has a strong impact on the dynamic aspect of the overall system, since it prevents U-plane BSs to be directly available at their times of turn on, i.e., at the time or shortly after the time they received a turn-on signal. This may lead to user outage or capacity shortage and leaves the system vulnerable to sudden traffic increases.

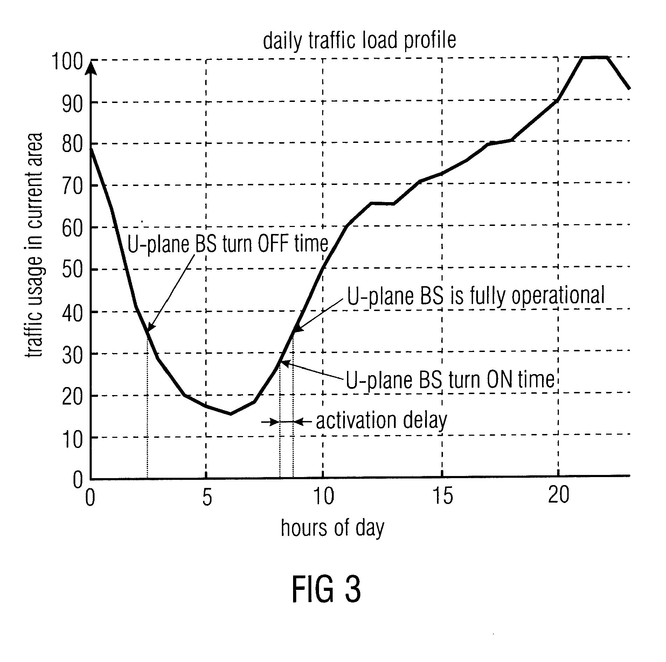

Fig. 3 is a diagram showing a schematic evolution of the daily traffic load profile in the vicinity of a U-plane BS. The diagram indicates the U-plane BS turn on/off times as well as the activation delay. As can be seen, in the early hours of a day the traffic usage drops constantly and when reaching a certain percentage the U-plane BS receives a signal causing the base station to shut down or to be turned off. In the early morning hours, the traffic usage begins to rise again, and to be sure that the U-plane BS is on and fully operational at a time at which a traffic usage exceeds a specific percentage it is necessary to send out the U-plane BS turn on signal well ahead of the desired on-time in view of the above mentioned activation delay.

Conventional wireless communication systems including a plurality of base stations (all at the same level), offer the possibility of completely turning off one or more base stations based on the carried traffic historical data in an individual base station. This generates fixed turn-off and turn-on times depending on the forecasted traffic for a base station. Such a conventional approach is only valid for a conventional heterogeneous network in which the macro cells or base stations are uniformly deployed so that the actual traffic distribution matches the measurable traffic in the individual cells. However, this is not the case in a detached cell concept (DCC) system as described above, so that the conventional approach just mentioned is not suitable for the DCC system. Actually, in a DCC system the determined traffic does not always reflect the actual geographical repartition of the traffic since the deployment of U-plane BSs may be non-uniform which leaves areas where no traffic information can be obtained. Also at a particular location the mobile stations may be connected either in the DC mode or in the legacy mode which needs to be considered when evaluating the amount of traffic. Further, the conventional approaches do not take into consideration the number of users, including idle users, when allowing base stations to be turned off which leaves the system vulnerable to unexpected traffic increases. E.g., in a DCC system the macro cell or B-plane BS may not be able to handle sudden traffic increases from too many users in the legacy mode.

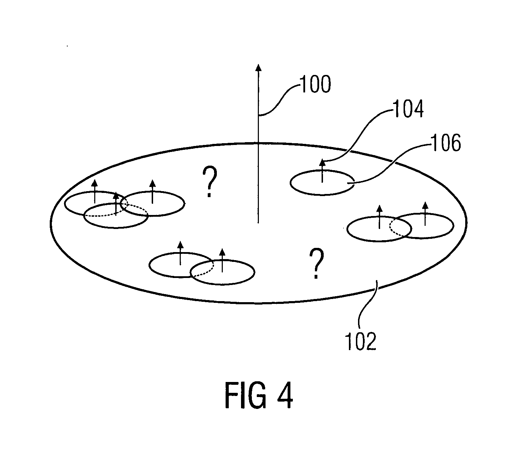

Fig. 4 shows a schematic representation of a DCC system including the C-plane BS 100 having the coverage area 102 including the plurality of U-plane BSs 104 having the coverage areas 106. The U-plane BS are not equally distributed in the coverage area 102 of the macro cell so that there are major regions indicated by "?"from which, via the respective U-plane BSs no carried traffic historical data, i.e., no traffic information, can be obtained so that a "coverage hole" is generated. Also, at a position where the "?" is depicted in Fig. 4, there may be a U-plane BS that has been turned off so that it is not possible to measure the traffic in the vicinity of a U-plane BS when it is off.

It is an object of the present invention to provide an improved approach for controlling an operational state of a user plane base station in a wireless communication system.

This object is achieved by a method of claim 1, a wireless communication system of claim 16, an apparatus of claim 17, a control plane base station of claim 18 or 19 and a user plane base station of claim 20.

The present invention provides a method for controlling an operational state of a user plane base station in a wireless communication system, the wireless communication system comprising a control plane base station having a coverage area including a plurality of user plane base stations, the method comprising:

turning off the user plane base station when a first condition on a carried traffic in a coverage area of the user plane base station and a second condition on a number of mobile users in the coverage area of the user plane base station is fulfilled.

In accordance with embodiments the coverage area of the control plane base station is divided into a plurality of geographical grid elements, and the method comprises storing for each of the grid elements time-varying information regarding the carried traffic and the number of mobile users in the coverage area of the control plane base station.

In accordance with embodiments one or more of the grid elements include one or more user plane base stations.

In accordance with embodiments the first condition is fulfilled when instantaneous values of the carried traffic in the grid element including the user plane base station were below a predefined threshold for a predefined first time period, and when historic values of the carried traffic indicate that the instantaneous traffic will stay low for a predetermined second time period, and the second condition is fulfilled when instantaneous values of the number of mobile users in the grid element including the user plane base station were below a predefined threshold for a predefined third time period, and when historic values of the number of mobile users indicate that the number of mobile users will stay low for a predefined fourth period of time.

In accordance with embodiments the instantaneous values are recorded during a predefined investigation interval, wherein the investigation interval is separated into a plurality of partitions, and wherein in each partition discrete samples indicating the carried traffic and the number of users for the coverage area of the user plane base station are measured, and the historic values are represented by measured samples indicating the carried traffic and the number of users for the coverage area of the user plane base station, wherein measured samples for a predefined time period are stored, and wherein the measured samples are separated by a time period being equal to or larger than the investigation interval.

In accordance with embodiments the carried traffic is determined based on the number of mobile users in a grid element and connected to the control plane base station and a measured data rate on each mobile user in the coverage area of the control plane base station, and the number of mobile users is determined based on the number of mobile users in a grid element and being at least in idle state.

In accordance with embodiments turning off the user plane base station comprises checking whether the first and second conditions are fulfilled, when both, the first and second conditions are fulfilled, entering a denial state for offloading the existing traffic from the user plane base station to be turned off, and once the last mobile user has been disconnected from the user plane base station, turning off the user plane base station.

In accordance with embodiments in the denial state the user plane base station to be switched off refuses connections from new mobile users and offloads the connected mobile users to other user plane base stations or to the control plane base station.

In accordance with embodiments in the denial state a new mobile user is allowed to connect to the user plane base station to be turned off in case the remaining user plane base stations and/or the control base station are overloaded.

In accordance with embodiments the method comprises turning on the user plane base station when a third condition on the carried traffic in the grid element including the user plane base station or a fourth condition on the number of mobile users in the grid element including the user plane base station is fulfilled.

In accordance with embodiments the third condition is fulfilled when the carried traffic, on the basis of the historic values, is predicted to increase to a level indicating that an additional user plane base station is needed, and the fourth condition is fulfilled when the number of mobile users, on the basis of the historic values, is predicted to increase to a level indicating that an unexpected traffic increase from idle users impacts the capacity in the coverage area of the control plane base station.

In accordance with embodiments turning on the user plane base station comprises checking that one of the third or fourth conditions is fulfilled, and when one of the third or fourth conditions is fulfilled, triggering a user plane base station turning on procedure so that after an activation time the user plane base station is on and fully operational.

In accordance with embodiments the method comprises obtaining geographical location updates from the mobile users in the coverage area of the control plane base station, wherein the updates are periodically sent by the mobile users or are requested by the control plane base station.

In accordance with embodiments the method comprises signaling from the control plane base station to the user plane base station turn-on and turn-off signals, and signaling from the user plane base station to the control plane base station an on-and-operational signal.

The present invention provides a computer system for performing, when running on a computer, the inventive method.

The present invention provides a wireless communication system, comprising a control plane base station having a coverage area including a plurality of user plane base stations for serving one or more mobile users, wherein the system is configured to control an operational state of a user plane base station in accordance with the inventive method.

The present invention provides a n apparatus for controlling an operational state of a user plane base station in a wireless communication system, wherein the wireless communication system comprises a control plane base station having a coverage area divided into a plurality of geographical grid elements, wherein one or more of the grid elements include one or more of a plurality of user plane base stations, the apparatus comprising a database for storing for each of the plurality of grid elements time-varying information regarding a carried traffic and a number of mobile users in the coverage area of the control plane base station; and a controller for determining on the basis of the time-varying information from the database whether for a user plane base station a first condition on the carried traffic and a second condition on the number of mobile users is fulfilled, and for outputting a turn off signal to the user plane base station when the first and second conditions are fulfilled.

The present invention provides a control plane base station in a wireless communication system, the wireless communication system comprising the control plane base station, wherein the control plane base station comprises a coverage area including a plurality of user plane base stations, and the control plane base station comprises the inventive apparatus.

The present invention provides a control plane base station in a wireless communication system, the wireless communication system comprising the control plane base station, wherein the control plane base station comprises a coverage area including a plurality of user plane base stations, the control plane base station comprises a controller for controlling the operational state of a user plane base station in accordance with the inventive method.

The present invention provides a user plane base station in a wireless communication system, the wireless communication system comprising a control plane base station having a coverage area including a plurality of user plane base stations, wherein the user plane base station comprises an interface for receiving a signal controlling the operational state of the user plane base station in accordance with the inventive method.

Embodiments of the present invention provide a novel approach for saving energy in a wireless communication system, more specifically in a C/U-plane separated network including a C-plane BS having a coverage area including a plurality of U-plane BSs. In accordance with the inventive approach, one or more U-plane BSs may be turned off for saving energy. However, for overcoming the prior art problems with regard to known energy saving schemes, turning off a U-plane BS only occurs when a first condition on the carried traffic and a second condition on the number of mobile users in the coverage area of a U-plane BS to be turned off are fulfilled at the same time.

In accordance with preferred embodiments, the coverage area of the C-plane BS is divided into a plurality of geographical grid elements allowing to keep track of the variations of the geographically distributed carried traffic and the number of users in the system, wherein each grid element holds respective time-varying information regarding the carried traffic and the number of mobile users in the coverage area of the C-plane BS. The grid elements may include one or more U-plane BSs, however, there may also be one or more grid elements which have not associated a U-plane BS therewith. The first condition may be determined on the basis of the instantaneous traffic in the grid element including the U-plane BS to be turned off and on the basis of the historic traffic in this grid element, whereas the second condition may be determined on the basis of the instantaneous number of mobile users in this grid element and on the basis of the historic number of mobile users in this grid element. Only when these two conditions are fulfilled, it can be reliably judged that the U-plane BS to be shut down will not be needed for a substantial time period which allows shutting down the U-plane BS despite the fact that turning it on again may require quite a substantial amount of time.

Thus, in accordance with the present invention, the above discussed activation delay issue as well as the limitations of prior art solutions are overcome keeping track of the variations of the geographically distributed carried traffic and the geographically distributed number of users in the system, and by dynamically determining the most appropriate moment in time to turn on or off one or more U-plane BSs. The decision to turn on or off a U-plane BS is not only based on the instantaneous metric values but also on historical values. On the basis of these values, it is ensured that the U-plane BS to be turned off will not be needed for some time, thereby minimizing the impact of the shutdown of the U-plane BS on the system capacity. Thus, the inventive approach provides for a small cell turn-on/off management system that is aware of the carried traffic and the user distribution in the system.

While turning off the U-plane BSs may be risky because turning them back "on" takes a non-negligible time that may lead to user outage, capacity shortages, and leave the network vulnerable to sudden traffic increases, it has been found by the inventors that it is relatively safe to turn off one or more U-plane BSs during periods in which unexpected traffic increases can be handled by the network, for example, when it is known that the traffic is going to be low and stay low for a long period of time in the vicinity of the U-plane BS and when it is known that the number of users in the vicinity of the U-plane BS is low and will stay low for a long period of time.

The inventive approach is advantageous as it focuses on long-term energy savings by completely turning off one or more U-plane BSs for a longer period of time, thereby reducing the energy consumption of the respective U-plane BS to almost zero. When compared to approaches known in the art using a "sleep" mode for a U-plane BS higher energy savings can be obtained by applying the inventive approach as the sleep mode only allows less savings over shorter time periods.

In accordance with embodiments, the inventive approach offers a way to properly keep track of the network matrix in a detached cell concept system enabling to safely turn off one or more U-plane BSs while coping with the issue of unexpected traffic increase vulnerability. The inventive concept of storing geographical time-varying values allows to overcome the limitations of prior art systems. Using both carried traffic and user distribution information enables to obtain a safe system where unwanted capacity shortages can be avoided during unexpected traffic increases. In addition to energy savings, turning off the U-plane BS also enables to reduce the level of inter-cell interferences, especially when in case of dense deployments. Turning off the U-plane BSs for a long period allows to reduce the overall power consumption of the system by a large percentage, larger than the percentage achievable by only putting the U-plane BSs into the "sleep" mode. This, in turn, results in a smaller energy bill and hence lower operational costs of the overall system.

In accordance with embodiments, in a dense deployment, instead of having U-plane BSs being turned on, each serving mobile station with a relatively low traffic load, it is determined, in view of energy efficiency, to turn off one or many of the U-plane BSs so that only the minimum number is left on while keeping the serving capability of the network unchanged. The granularity of the geographical grid of the C-plane BS may vary according to the type of deployment. In densely deployed scenarios, there may be multiple U-plane BSs per geographical grid element when the coverage is overlapping to a large extent. In this case, turning off a maximum number of cells and only leaving a reduced number of U-plane BSs on results mostly in a capacity problem and not in a coverage problem. In order to make sure that the mobile station traffic will be supported by the reduced number of U-plane BSs, the traffic history needs to be checked in order to make sure that turning off a U-plane BS will not impact the capacity of the geographical grid element for a reasonable time. This can be checked by making sure that the following equality remains valid for a long enough period of time:

$$planned\ traffic\ of\ grid\ element < \sum supported\ traffic\ of\ U\text{-}plane\ BSs\ staying\ on$$

Embodiments of the invention will be described in detail below with regard to the attached drawings in which:

Fig. 1      shows the general structure of a C/U-plane separated network;

Fig. 2      shows a diagram indicating the available operating modes for different mobile users in a C/U-plane separated network;

Fig. 3      is a diagram showing a schematic evolution of the daily traffic load profile in the vicinity of a user-plane base station BS in a C/U-plane separated network;

Fig. 4      shows a schematic representation of a detached cell concept (DCC) system including a C-plane BS having a coverage area including a plurality of U-plane BSs having respective coverage areas;

Fig. 5      schematically represents the detached cell system described with regard to Fig. 1 in a situation where a high number of mobile users are present;

Fig. 6      shows a situation similar to Fig. 5 except that the number of users is assumed to be low;

Fig. 7      shows a flow diagram for turning off a U-plane BS;

Fig. 8      is a flow diagram indicating how to turn on a U-plane BS after it has been turned off;

Fig. 9      is a schematic representation of a geographical division of a C-plane BS coverage area into a plurality of elements;

Fig. 10      shows a representation of the geographical division of the C-plane BS coverage area, wherein Fig. 10(a) shows the division of the coverage area into different geographical grid elements similar to Fig. 9, wherein Fig. 10(b) shows the traffic values $\alpha_1$ to $\alpha_6$ stored for each grid element, and wherein Fig. 10(c) shows the number of users $N_1$ to $N_6$ stored for each grid element;

Fig. 11      shows the determination of the respective instantaneous and historical values for a geographical grid element, wherein Fig. 11 (a) indicates how instantaneous values are determined, and wherein Fig. 11(b) explains how historical values are determined;

Fig. 12      shows a flow diagram of an algorithm for turning off a U-plane BS in accordance with an embodiment;

Fig. 13      shows a flow diagram of an algorithm to turn on a U-plane BS in accordance with embodiments of the invention;

Fig. 14    shows two diagrams indicating the trade-off between energy savings and user experience, wherein Fig. 14(a) indicates energy savings, and wherein Fig. 14(b) indicates the average user experience;

Fig. 15    shows a wireless communication system including a plurality of macro cells;

Fig. 16    shows a detached cell system as in Fig. 1, wherein the C-plane BS 100 includes a controller and a database; and

Fig. 17    shows an apparatus in a detached cell system of Fig. 1 including the a database and a controller coupled via an interface with a C-plane BS.

Embodiments of the present invention will be described in further detail below and concern a self-optimizing small cell turn-on/off management system in a detached cell network. The inventive approach allows small cells in a C/U-plane separated network as it is, for example, described in Fig. 1, to be completely turned off when not in use, so as to save energy and to turn the back on when needed. Further, turning off unused small cells may help to reduce levels of inter-cell interferences, especially in densely deployed networks that may exhibit very high interference levels. However, while turning off a small cell is basically an instantaneous process, turning it on again may be quite a lengthy process that provokes an activation delay, thereby impacting capacity of the overall network to dynamically serve mobile stations. As mentioned above, prior art approaches offer the possibility to use the carried traffic of individual cells to turn off the base stations in a distributed fashion. However, this approach faces numerous shortcomings because the traffic at the individual base stations does not always reflect the actual distribution of the traffic in a geographical fashion which is difficult to obtain without centralized processing. Further, the number of idle users is not taken into consideration in prior art systems which leaves the system vulnerable to unexpected traffic increases in case a lot of idle users start requesting data traffic from the network. Therefore, embodiments described in the following in further detail provide a self-optimizing small cell turn-on/off management system implementing a database that contains geographically mapped information about the carried traffic and about the user distribution in the network. This database stores both current instantaneous values and historical values in order to prevent unwanted small cell turn off and to anticipate the times at which it is safe to turn off the small cells and necessary to turn them back on. Also, embodiments propose a geographic location-based traffic unloading technique so as to keep the number of turned on small cells to a minimum as well as a feature to assist the deployment of small cells in the network.

Prior art approaches do not take into consideration the issue of unexpected traffic increases when deciding about turning on/off base stations. The issue of unexpected traffic increase may arise randomly and is difficult to predict. An unexpected traffic increase is a risk generating factor and needs to be considered when dealing with energy savings. To cope with an unexpected traffic increase, in accordance with embodiments of the present invention a key factor that allows to cope with an unexpected traffic increase has been identified as being the number of users of the network including the idle users.

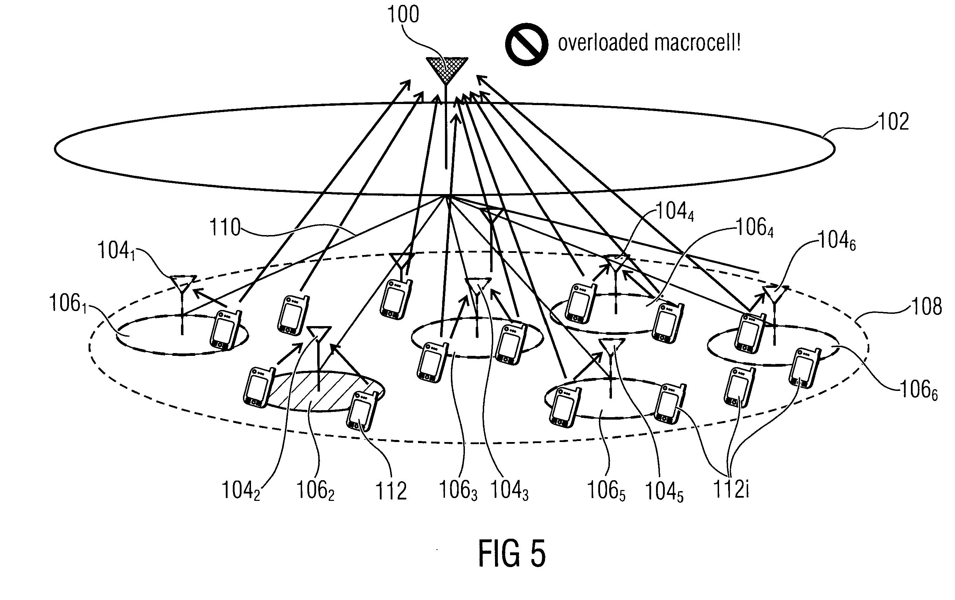

Fig. 5 schematically represents the detached cell system described with regard to Fig. 1 in a situation where a high number of mobile users 112 are present. Most of the mobile users 112 are either connected to the control plane base station (C-plane BS) 100, i.e., operate in the legacy mode, as is schematically represented by those mobile stations 112 having associated therewith only a single arrow pointing from the mobile station to the C-plane BS 100. Other mobile stations operation in the detached cell mode indicated by those mobile stations 112 having associated therewith two arrows, one pointing to the respective user plane base station (U-plane BS)in the U-cell and another one pointing to the C-plane BS 100. In addition, a number of idle mobile users 112i are shown which, at present, do not have any connection to the network. Fig. 5 shows a situation in which in the detached cell network only the cell $106_2$ is active while the remaining cells $106_1$ and $106_3$ to $106_5$ have been turned off so that the traffic handled by these small cells now needs to be directly handled by the C-plane BS 100. While this may be possible on the basis of the active users connected to the system at the time of switching off the respective small cells $106_1$ and $106_3$ to $106_6$, the macro cell may be overloaded in case one or more of the additional idle users 112i try to connect to the network. Also, a overload situation may occur when turning off too many small cells which results in an increased traffic to be handled by the C-plane BS 100 which may lead to an overload of the macro cell. The obvious solution to this problem is to not allow any of the small cells to be turned off which, however, in terms of energy savings is not desired.

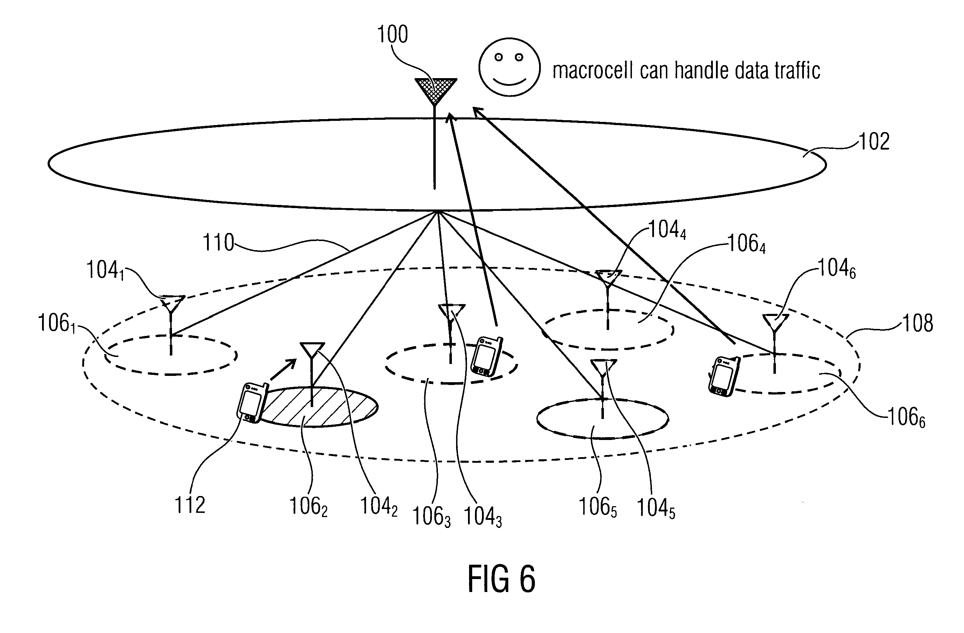

Fig. 6 shows a situation similar to Fig. 5 except that the number of users is assumed to be low. In a specific situation as shown in Fig. 6, when turning off the subcells $106_1$ and $106_3$ to $106_6$ the mobile users 112 handled by cells $106_3$ and $106_6$ can be easily handled by the C-plane BS, i.e., due to the low number of users the macro cell can now cope with an unexpected traffic increase so that the small cells can be turned off or left off with a minimal risk.

Thus, from Figs. 5 and 6 it can be derived that it is relatively safe to turn off U-plane BSs during periods in which unexpected traffic increases can be handled by the network, i.e., in cases when it is known that the traffic is going to be low and stay low for a long period of time in the vicinity of the U-plane BS and when it is known that the number of users in the vicinity of the U-plane BSs is low and will stay low for a long period of time. The inventive system keeps track of the carried traffic variation and the number of users in the network so as to turn off or on one or more of the U-plane BSs at the most appropriate moment in time.

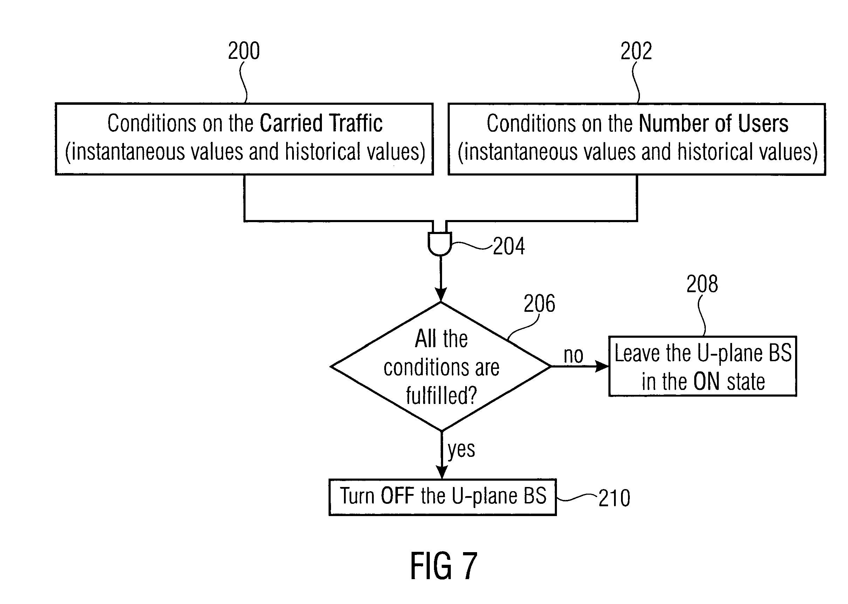

Fig. 7 shows a flow diagram for turning off a U-plane BS. In block 200 the conditions on the carried traffic are determined, based on instantaneous values and historical values to determine whether the instantaneous carried traffic in the vicinity of the U-plane BS to be turned off has been low enough for some time and is estimated to stay long enough in the near future, based on stored traffic history values. In block 202 the condition on the number of users is determined, again based on instantaneous values and historical values. The instantaneous number of users in the vicinity of the U-plane BS needs to be low enough and needs to stay low for a long enough time in the near future, as estimated using historical values of the number of users. Due to the activation delay associated with the turning on of a U-plane BS, the above mentioned factors of the instantaneous carried traffic and the instantaneous number of users in the vicinity of the U-plane BS is to be taken into consideration before allowing the U-plane BS to be turned off. Turning off a U-plane BS may only be allowed when it is sure that it is not going to be needed for a long time, and in accordance with embodiments of the invention this is determined to be the case when both the conditions on the carried traffic 200 and the conditions on the number of users 202 are fulfilled, as is schematically indicated by the AND gate 204 in Fig. 7. This approach may also be called the "AND" approach since the conditions on the carried traffic 200 and the number of users 204 must be fulfilled for a U-plane BS to be turned off. In block 206, this determination is made, i.e., it is determined as to whether all the conditions 200, 202 are fulfilled. In case this is not true, the U-plane BS will remain in its on state as indicated in block 208. Otherwise, i.e., in case all the conditions have been fulfilled, it is judged that the U-plane BS will not be needed for a long time so that it is safe to turn it off as indicated in block 210.

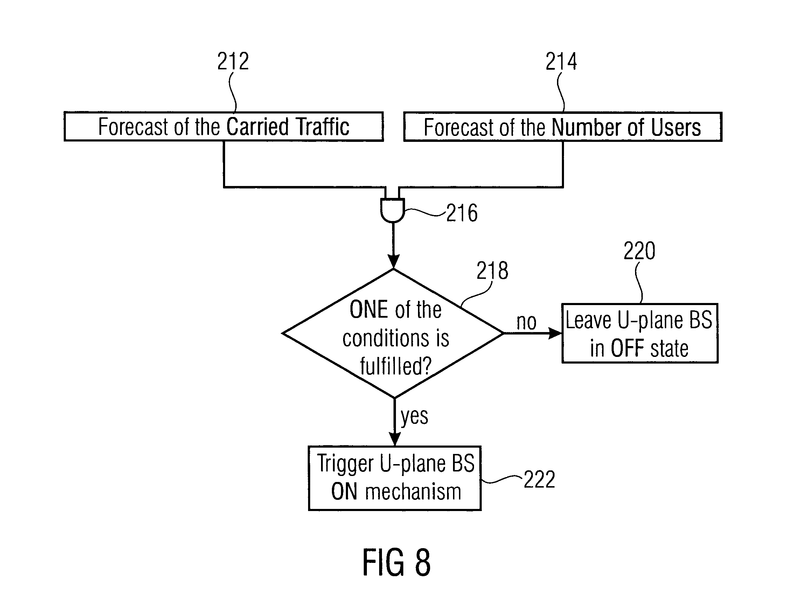

Once a U-plane BS has been turned off, in accordance with further embodiments, it needs to be determined as to whether the situation in the network changed requiring to turn on the U-plane BS again. Fig. 8 is a flow diagram indicating how to turn on a U-plane BS after it has been turned off. When compared to Fig. 7, when turning on a U-plane BS, a different approach may be taken. To be sure not to impact the system capacity to serve mobile stations, a U-plane BS may be allowed to be turned on dependent on the forecast of the carried traffic as indicated in block 212 and the forecast of the number of users as indicated in block 214. The forecast of the carried traffic 212 is a forecast that indicates that the carried traffic in the vicinity of the U-plane BS is estimated to increase to a level at which an additional U-plane BS is needed. The forecast of the number of users 214 indicates that the number of users in the vicinity of the U-plane BS is estimated to increase to a level at which unexpected traffic increase from idle users would impact the capacity of the system. As is indicated by the OR Gate 216, for turning on a U-plane BS, it is sufficient when one of the conditions 212, 214 is fulfilled, and this is determined in block 218. In case it is determined in block 218 that none of the conditions 212 to 214 is fulfilled, the U-plane BS will remain in its off state as indicated in block 220. Otherwise, in case one of the conditions 212 and 214 is fulfilled, the U-plane BS will be triggered to be turned on, as indicated in block 222. The approach described with regard to Fig. 8 may be referred to as "OR" approach since either the condition of the instantaneous traffic or the condition of the traffic history needs to be fulfilled to trigger the U-plane BS turn on procedure.

As described above, in order take the decision to turn on or off a U-plane BS, the carried traffic and the user distribution in the network need to be evaluated. In a detached cell system as described with regard to Fig. 1, the traffic in each U-plane BS does not necessarily represent actual traffic in the vicinity of the U-plane BS since the deployment of U-plane BSs can be irregular and non-uniform. Therefore, it is difficult to obtain a regular repartition of the traffic in geographical terms, i.e., in which geographical area is the traffic too high or too low, how can it be better balanced and the like, by simply considering the traffic in individual U-plane BSs. To address this problem, in accordance with embodiments of the invention, the C-plane cell coverage area 102 is divided in the form of a geographic grid having a plurality of grid elements. Each grid element has associated a specific grid element ID, and for each grid element time-varying information regarding the traffic and the number of users in this area is stored and may be called geographical time-varying carried traffic and geographical time-varying user distribution.

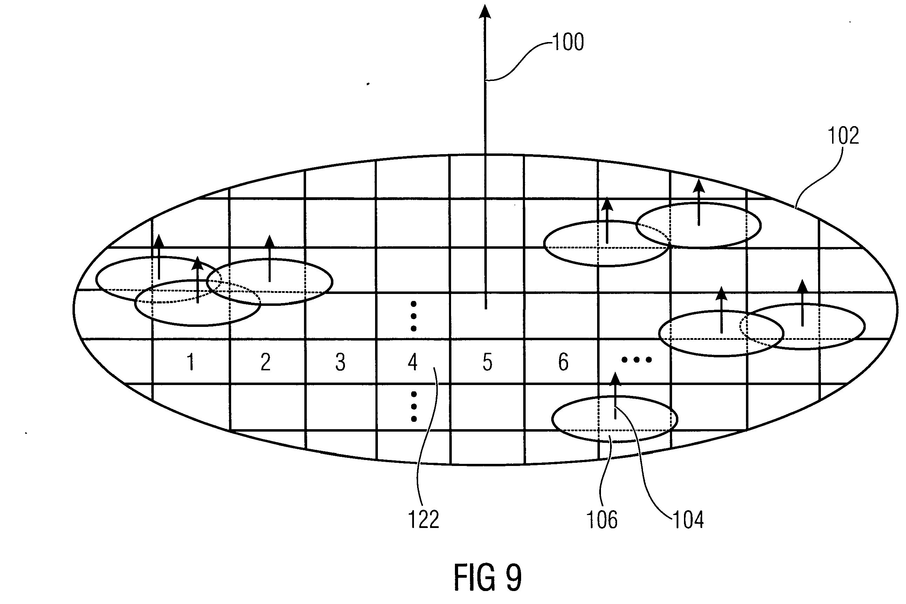

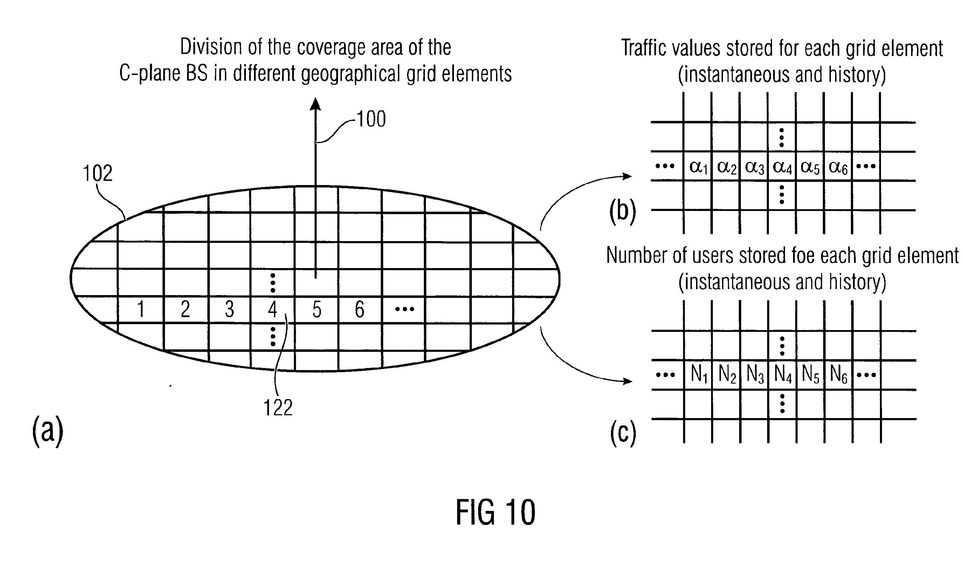

Fig. 9 is a schematic representation of the geographical division of the C-plane BS coverage area 102. The area 102 is divided into a plurality of elements 122, each associated with a respective ID, as is schematically indicated for some of the grid elements 122 by the numbers "1", "2" ... In accordance with embodiments, the placement of the U-cells 106 in the U-plane is not covering the entire coverage area 102 of the C-plane BS 100, rather, some areas are not covered by respective U-cells. There are some grid elements 122 which do not include any U-plane BS or user cell, whereas one or more of the grid elements 102 may include one or more U-cells 106. In accordance with the embodiment described with regard to Fig. 9, the C-plane coverage 102 is mapped to the geographical grid having the grid elements 122 each having a specific ID or index. For each grid element information about the traffic of each user and about the number of users, both active users and idle users, is stored, for example, in a database. The values are time-varying since for a grid element not only instantaneous values are stored but also historical values. Fig. 10 shows a representation of the geographical division of the C-plane BS coverage area and the carried traffic and the number of user values stored in the database. Fig. 10(a) shows the division of the coverage area into different geographical grid elements in a way as shown and described with regard to Fig. 9. Fig. 10(b) shows the traffic values $\alpha_1$ to $\alpha_6$ stored for each grid element 122, wherein the traffic values include instantaneous and history values. Likewise, as is shown in Fig. 10(c) for each grid element the number of users $N_1$ to $N_6$ is stored, again both instantaneous and history values are stored. The historical values are used to evaluate the evolution of the traffic and the number of users before turning off or turning on a U-plane BS, and the instantaneous values are used to prevent turning off a U-plane BS when the current traffic and the current number of users (idle or not) is considered to be too high, regardless of the stored historical values.

The size of the geographical grid elements 122 depends on the type of deployment that may be sparse or dense. For sparse deployments, it is preferable that the size of one grid element corresponds to the coverage area of one U-plane BS. In this way, it is ensured that when a mobile station is located in a grid element where a U-plane BS is present, it can connect to it whenever possible. For dense deployments, it is preferable to dimension the granularity factors so that at least one U-plane BS per zone is provided. This not only makes the U-plane coverage ubiquitous but also allows several U-plane BSs to be inside one graphical grid element, especially when the coverage is overlapping to a large extent. In this way it is possible to implement unloading features by keeping the number of U-plane BSs turned on to the lowest within one grid element while being able to serve all the users.

In each geographical grid element 122 of the C-plane BS coverage area 102 traffic information is stored under the form of a traffic value $\alpha_k$ representing the number of mobile users in a connected state, for example the RRC_CONNECTED state within the geographical grid element k, multiplied by the measured data rate on each mobile station in this grid element. In other words, $\alpha_k$ may be computed as follows:

$$\alpha_k = \sum_{\text{in grid element } k} \text{MS in RRC\_CONNECTED state} \times \text{MS data rate}$$

The traffic values both represent the traffic of mobile stations connected with the network in the legacy mode and the traffic of mobile stations connected to the network in the detached cell mode.

Similar to the carried traffic, information about the user distribution is stored in each grid element of the C-plane database. The stored value $N_k$ represents the number of mobile stations being at least in an idle state, for example the RRC_IDLE state, in the geographical grid element k, i.e., also mobile stations in high connectivity states are considered, for example, mobile stations in the above mentioned RRC_CONNECTED state.

In accordance with embodiments, high-mobility users that do not connect to the small cells in any situation, due to the repetitive handover problem, are not counted in the user distribution matrix.

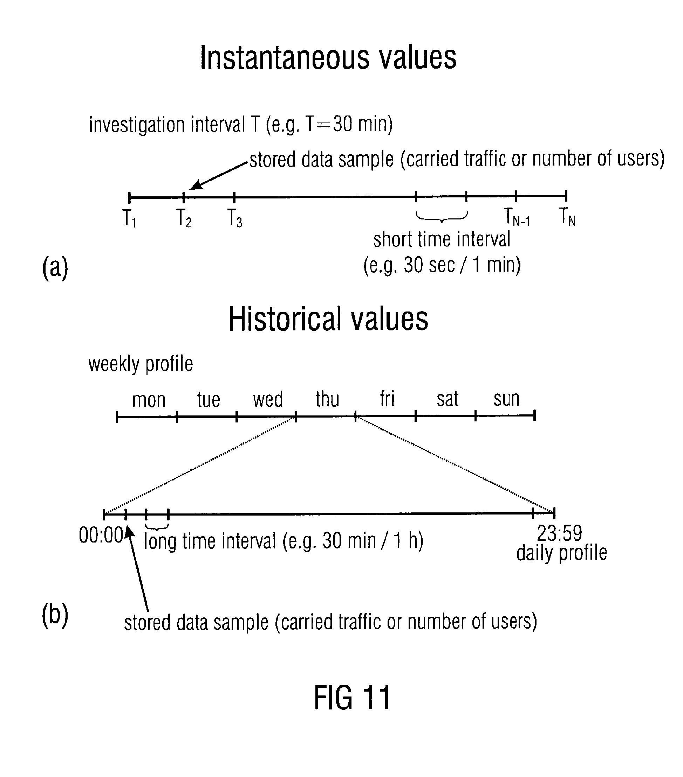

The values stored in the database are both available as instantaneous values and historical values. Historical values serve as a base for the evaluation of the near future evolution of the carried traffic and of the number of users in the geographical grid element 122 before making a decision to turn off or on a U-plane BS in the grid element 122. The instantaneous values are used to prevent turning off a U-plane BS when the currently measured carried traffic or a number of users is considered to be too high to safely turn off a U-plane BS, regardless of the forecast turn off time based on the stored historical values. With regard to Fig. 11, the determination of the respective instantaneous and historical values for a geographical grid element 122 will be described in further detail. Fig. 11 (a) indicates how instantaneous values are determined. The instantaneous values are recorded during an investigation interval T and are separated in closely measured discrete samples, for example samples taken every minute, at times $T_1$, $T_2$, ..., $T_N$. The duration of the investigation interval is limited to a short period of time, for example, thirty minutes. Fig. 11 (b) explains how historical values are determined. The historical values are represented by traffic and user distribution data for a fixed longer period of time, for example, for a period of one week, while traffic measurements are stored separated by relatively long times, for example, one measurement every thirty minutes or every hour. In other words, as is derivable from Fig. 11, the instantaneous values comprise stored data samples for the carried traffic and the number of users at the respective times $T_1$ to $T_n$ over the investigation interval T, for example a sample is taken every thirty seconds or every minute within the investigation interval. For the historical values, in accordance with embodiments, a weekly profile may be stored and for each day, for example for Thursday as depicted in Fig. 11 (b), for each long time interval, for example, for each period of thirty minutes or one hour which may correspond to the investigation interval for determining the instantaneous values, one data sample from the investigation interval is stored as historical value.

In accordance with embodiments of the invention, to allow the different elements of the detached cell system as described with regard to Fig. 1 to communicate with one another a new signaling protocol is provided. More specifically, the signaling procedures between the mobile stations and the C-plane BSs as well as signaling procedures between the U-plane BSs and the C-plane BSs are required. In order for the C-plane BS 100 (see Fig. 1) to update the geographical time-varying values in the database, it is necessary to know in which geographical grid element each mobile station is located. Therefore, on a regular basis, geographical location information updates are obtained from the mobile station, especially when the mobile stations are moving since their associated geographical grid element might change. These updates can either be sent periodically by the mobile stations (user-triggered) or may be requested by the network (network-triggered). In order for a C-plane BS to control one or more U-plane BSs 104 and to keep track of the status of each U-plane BS 104, the following signals may be provided:

- a "turn OFF" signal from the C-plane BS 100 to switch off a U-plane BS 104,
- a "turn ON" signal from the C-plane BS 100 to initiate the switch on the procedure of a U-plane BS 104, and
- a "ON & operational" signal from the U-plane BS 104 to indicate the readiness status to the C-plane BS 100.

In the following, further embodiments of the inventive method or algorithm for turning on/off a U-plane BS will be described. Since a U-plane BS 104 (see Fig. 1) can only be turned off when it is sure not to be needed, there are multiple factors that need to be taken into consideration before turning it off. More specifically, conditions on the carried traffic in the vicinity of the U-plane BS 104 are to be considered, namely the instantaneous traffic in the grid element 122 of the U-plane BS must be kept to a low level, below a low traffic threshold, for a specific period $tl_{ow,inst}$. Also, the traffic history must indicate that the traffic in the near future can be supported without this U-plane BS. Also, conditions regarding the number of users in the vicinity of the U-plane BS need to be considered, namely the instantaneous number of users in the grid element 122 of the U-plane BS 104 needs to be kept to a low level, below a low number of users threshold for a specific period $t_{low,inst}$, and according to the historical values, the number of users needs to be predicted to stay low in the near future.

Further, turning off the U-plane BS is possible when its potential traffic can be unloaded to some other place. In the detached cell system there may be two possibilities, namely unloading the traffic to the C-plane BS 100 in the legacy mode or to another U-plane BS 104 in the DC mode. Further, turning off the U-plane BS is possible in case an unexpected traffic increase from all idle users can be supported by the C-plane BS 100 in the legacy mode or by some other U-plane BSs 104 in the DC mode.

Provided the above requirements are fulfilled, a U-plane BS turning off algorithm in accordance with embodiments of the invention includes:

- checking that both the conditions on the carried traffic and on the number of users has been fulfilled,
- when both of the conditions are fulfilled, putting the U-plane BS in the "denial" state (described later), and
- when the last user has been disconnected from the U-plane BS, automatically turning off the U-plane BS.

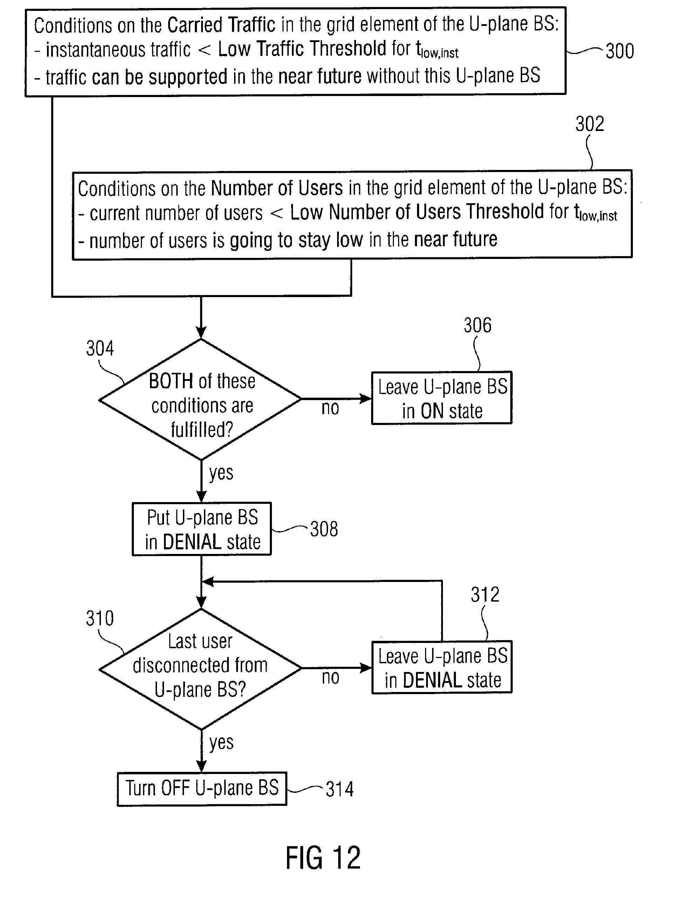

Fig. 12 shows a flow diagram of an algorithm for turning off a U-plane BS in accordance with an embodiment. At block 300 the conditions on the carried traffic in the grid element 122 of the U-plane BS to be turned off are determined, i.e. it is determined whether the instantaneous traffic is below the low traffic threshold for the time period $t_{low,inst}$. Also, it is determined whether the traffic can be supported in the near future without this U-plane BS. In a similar way, at block 302 the conditions on the number of users in the grid element 122 of the U-plane BS to be turned off are determined, i.e. it is determined whether the current number of users is below the low number of users threshold for the time period $t_{low,inst}$ and whether the number of users is going to stay low in the near future. The conditions determined in block 300 and 302 are fed to the decision block 304 in which it is determined whether both of these conditions are fulfilled. In case it is determined in decision block 304 that the two conditions are not both fulfilled, the algorithm goes to block 306 and leaves the U-plane BS in its own state. Otherwise, in case it is determined in decision block 304 that both of the conditions determined in blocks 300 and 302 are fulfilled, the algorithm proceeds to block 308 in which the U-plane BS is put into a denial state.

The denial state is provided in accordance with embodiments for the following reasons. Even when the two conditions on the carried traffic and on the number of users are fulfilled, the U-plane BS may not be directly turned off since it first needs to unload its existing traffic. To do so, the denial state is provided. In the denial state the U-plane BS to be turned off refuses connections from new mobile stations and tries to redirect traffic to other cells as much as possible. In addition, in the denial state, currently connected mobile stations are offloaded to other U-plane cells or to the C-plane whenever possible.

Mobile stations may connect to the U-plane BS in the denial state only in very specific conditions, for example in case of sparsely deployed networks when the C-plane BS 100 is overloaded so that only a U-plane BS in the denial state can serve the new mobile station, or in densely deployed networks, when the C-plane BS 100 and all available neighboring U-plane BSs are overloaded.

Once the algorithm shown in Fig. 12 has put the U-plane BS to be turned off into the denial state as indicated in block 308, it is determined in decision block 310 whether the last user is disconnected from the U-plane BS. In case it is determined that there are still users connected to the U-plane BS, the U-plane BS is left in the denial state until the last user has been disconnected from the U-plane BS to be turned off. Then, the algorithm proceeds to block 314 where the U-plane BS is actually turned off.

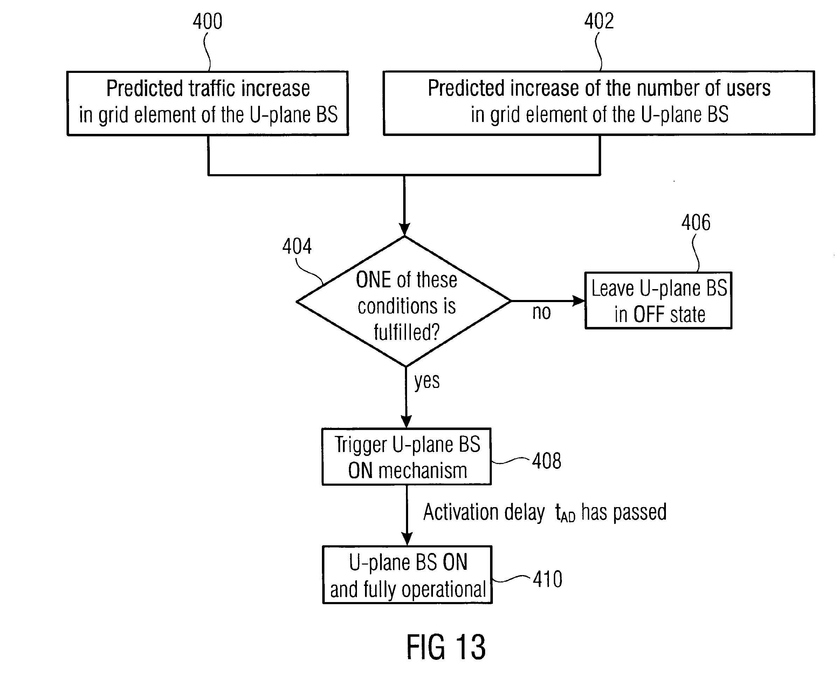

Fig. 13 shows a flow diagram of an algorithm to turn on a U-plane BS in accordance with embodiments of the invention. As is shown in Fig. 13, at block 400 a predicted traffic increase in the grid element 122 of the U-plane BS to be turned on is determined. More specifically, for turning on a U-plane BS, there needs to be a predicted traffic increase in the vicinity of the U-plane BS to be turned on. The traffic increase may be predicted using the historical values stored for the carried traffic in the grid element including the U-plane BS to be turned on. In block 402 a predicted increase in the number of users in the grid element of the U-plane BS to be turned on is determined. A U-plane BS needs to be turned on when there is a predicted increase of the number of users in the vicinity of the U-plane BS to be turned on and the traffic increase may be predicted using the historical values stored for the number of users in the grid element including the U-plane BS to be turned on. The predicted increases from blocks 400 and 402 are fed to the decision block 404 where it is determined whether one of the conditions is fulfilled. The above-described OR approach is used in the algorithm of Fig. 13 to make sure that the system capacity is not impacted when turning on/off a U-plane BS, i.e. the system should be likely to sacrifice some energy savings by turning on a U-plane BS a bit too early when it is not yet needed rather than leaving it off for a too long time, thereby degrading the system capacity.

At decision block 404 it is checked if one of the above-stated conditions on the carried traffic or on the number of users has been fulfilled. In case neither of the conditions is fulfilled, the algorithm proceeds to block 406 leaving the U-plane BS in its off-state. Otherwise, in case it is determined that one of these conditions is fulfilled, the algorithm proceeds to block 408 triggering the U-plane BS turning on procedure. After the activation delay $t_{AD}$ has passed, the U-plane BS is on and fully operational again, as is indicated at block 410, and the turned on U-plane BS may signal to the C-plane BS 100 that it is on and fully operational now.

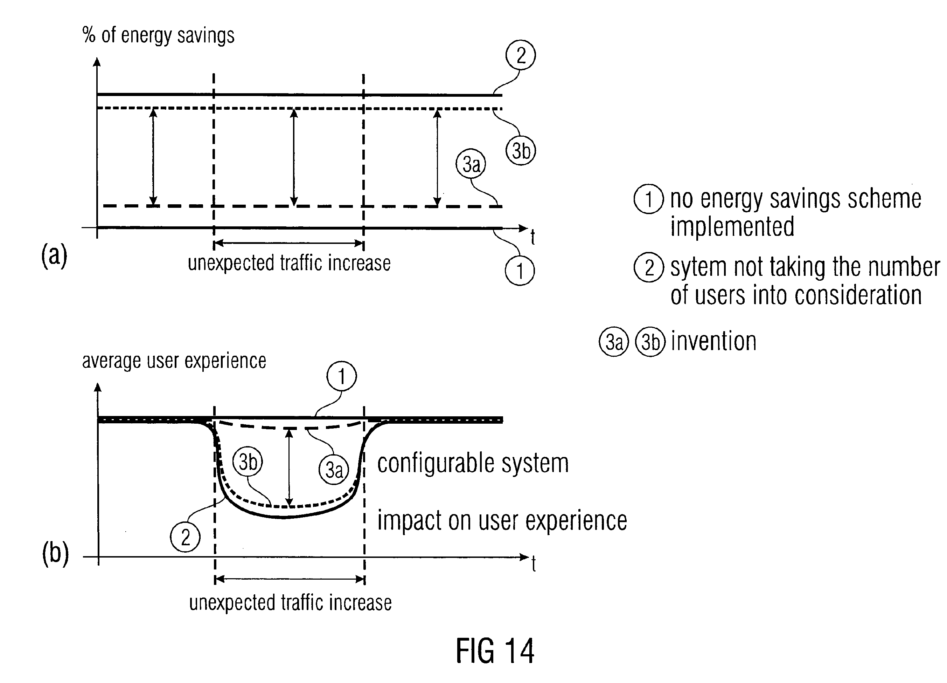

In accordance with embodiments, the invention allows to adjust the critical levels with respect to the carried traffic and to the number of users dependent on a desired system behavior. For example, for a very conservative system where the user experience needs to be prioritized at all costs, the critical tolerated quantity of traffic and tolerated number of users can be set to a very low level. On the other hand, for a system in which energy savings are to be prioritized at the expense of a sub-optimal user experience, the critical number of tolerated users and the tolerated quantity of traffic can be set to a higher level. These critical levels are easy to change and can be decided by the network operator, e.g. after carrying out a simulation or field trials. Fig. 14 shows two diagrams indicating the trade-off between energy savings and user experience. As can be seen from Fig. 14(a) when considering a system not implementing any energy savings schemes, as represented by line "1" no energy savings are available. At the same time, as can be seen from Fig. 14(b) for such a system, the average user experience constantly remains at a high level, even in case of a time period with an unexpected traffic increase. When considering a system implementing an energy saving scheme, however not taking into consideration the number of users, as is done in prior art approaches, high energy savings as shown by line "2" in Fig. 14(a) are achievable, however, in case of an unexpected traffic increase, as is shown in Fig. 14(b) a substantial impact on user experience is observed. In Figs. 14(a) and (b) the potential energy savings and the impact on user experience when implementing the inventive approach is depicted by lines "3a" and "3b". As is indicated by the respective arrows, the critical levels can be shifted dependent on whether user experience or energy savings are to be prioritized so that, when implementing a system having high energy savings (see line 3b), on the other hand, the user experience may be affected stronger when compared to a situation where a lower energy saving (see line 3a) is obtained. Thus, the inventive approach by setting the respective levels of carried traffic a number of users allows to adjust energy savings with his user experience dependent on the specific needs of a system to be implemented and provides for a flexibility not achievable with prior art approaches either implementing no energy saving scheme or implementing an energy saving scheme without considering the number of users in the system.

In the above described embodiments, for turning off a U-plane BS, instantaneous traffic and an instantaneous number of users in the grid element of the target U-plane BS are compared to thresholds to see if the condition to turn off the U-plane BS has been fulfilled. In accordance with embodiments, these thresholds reflect the current situation in the network and are designed to be variable and dynamically updatable, dependent on environmental parameters. For example, such environmental parameters may include the number of U-plane BSs in the on state in the vicinity of the target U-plane BS and the number of users currently connected to the C-plane BS. In addition, as an additional security for the system embodiments require the instantaneous traffic and the number of users to be under the respective thresholds for certain periods of times to avoid a false alarm due to isolated low spikes.

In accordance with embodiments of the invention, storing the geographical time-varying carried traffic values in a C-plane BS database allows to help in the deployment of the detached cell network. More specifically, the stored traffic history values may indicate that some U-plane BSs are almost never turned on in a geographical grid element, hence they may be considered superfluous and could be removed from the network. On the other hand, the stored traffic history values may indicate that the traffic level of some U-plane BSs are frequently at critical levels and that the deployment of additional U-plane BSs would be beneficial for the system.

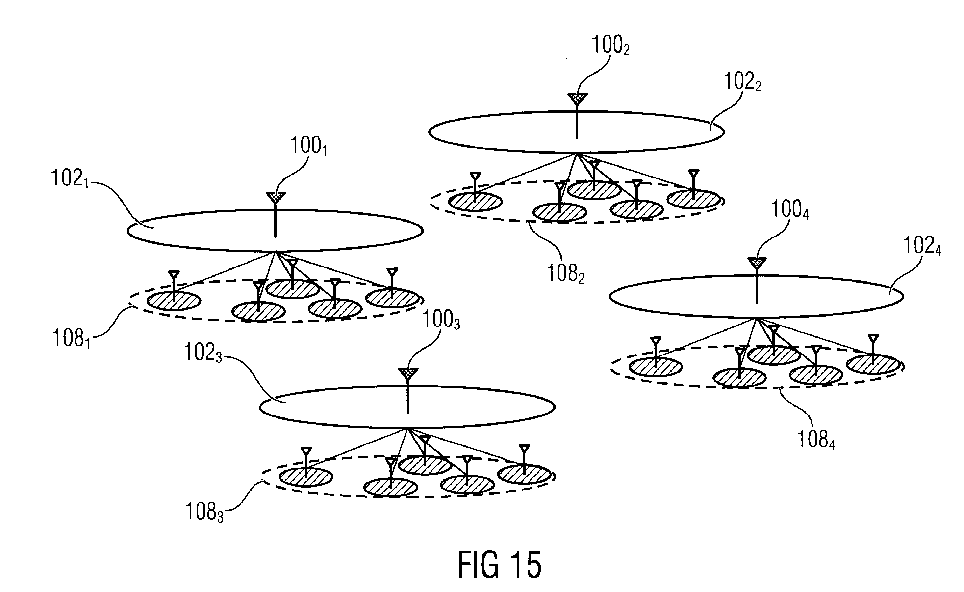

In accordance with embodiments, a wireless communication system is provided including a plurality of macro cells $100_1$-$100_4$ each including a plurality of smaller cells, i.e. the wireless communication system includes one or more detached cell systems as depicted in Fig. 1, as is schematically represented by Fig. 15.

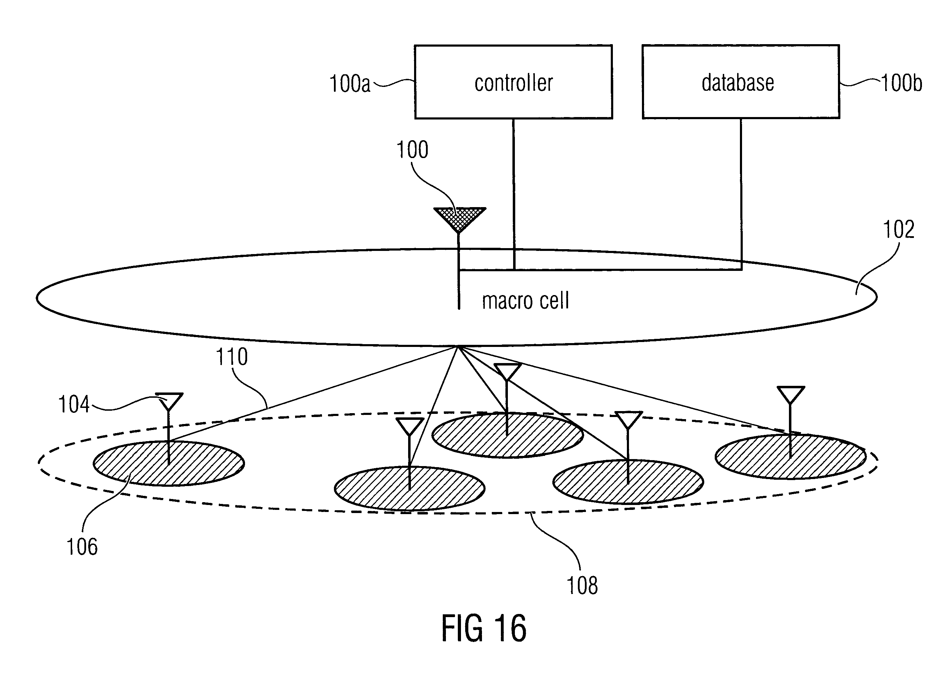

In accordance with embodiments, the inventive approach may be implemented in the C-plane BS 100 including a controller 100a controlling the operational state of one or more U-plane BSs in a way as described above. Fig. 16 shows a detached cell system as in Fig. 1 in which the C-plane BS 100 also includes the above-mentioned controller 100a. Further, in accordance with embodiments, the C-plane BS 100 also includes a database 100b as depicted in Fig. 16 for storing the respective traffic values and number of users for each grid element of the geographical grid elements into which the coverage area 102 of the C-plane BS 100 has been divided.

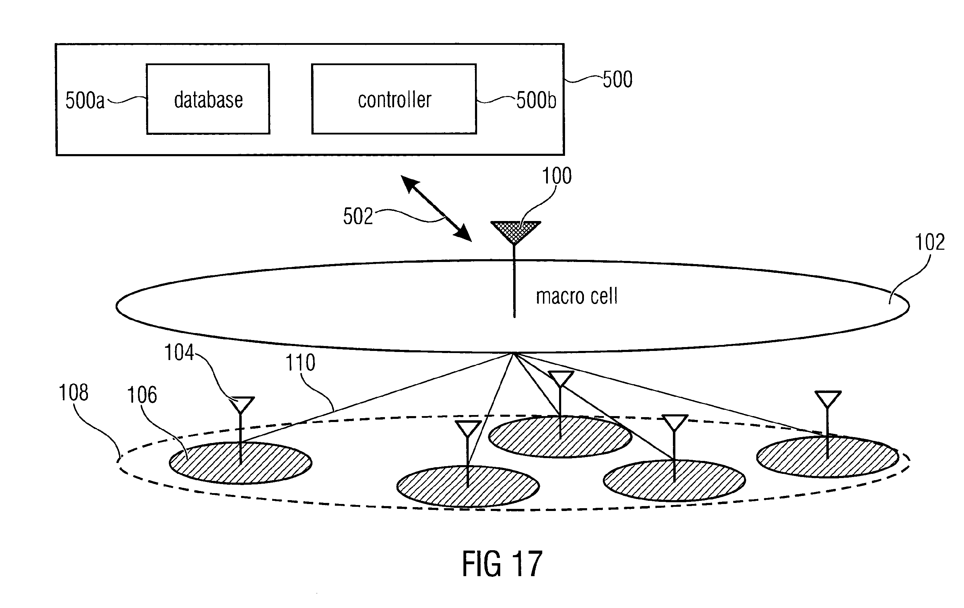

In accordance with further embodiments, an apparatus may be provided. Fig. 17 shows the detached cell system of Fig. 1 including the apparatus 500 including a database 500a and a controller 500b that is coupled via an interface schematically represented by the connection 502 with the C-plane BS 100. The apparatus 500 stores in its database 500a the respective values of the respective grid elements and, by means of the controller, provides a turn off signal that is communicated to the respective U-plane BS via the interface 502.

Further, in accordance with embodiments, the U-plane BSs 104, for example by means of their backhaul connection, are provided with an interface for receiving the signal controlling the operational state in a way as described above.

Although some aspects of the described concept have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a DVD, a Blue-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

## Claims

1. A method for controlling an operational state of a user plane base station ($104_1$-$104_5$) in a wireless communication system, the wireless communication system comprising a control plane base station (100) having a coverage area (102) including a plurality of user plane base stations ($104_1$-$104_5$), the method comprising:

   turning off the user plane base station ($104_1$-$104_5$) when a first condition on a carried traffic in a coverage area

($106_1$-$106_5$) of the user plane base station ($104_1$-$104_5$) and a second condition on a number of mobile users in the coverage area ($106_1$-$106_5$) of the user plane base station ($104_1$-$104_5$) is fulfilled.

2. The method of claim 1, wherein the coverage area (102) of the control plane base station (100) is divided into a plurality of geographical grid elements (122), and wherein the method comprises:

storing for each of the grid elements (122) time-varying information regarding the carried traffic and the number of mobile users in the coverage area (102) of the control plane base station (100).

3. The method of claim 2, wherein one or more of the grid elements (122) include one or more user plane base stations ($104_1$-$104_5$).

4. The method of claim 2 or 3, wherein
the first condition is fulfilled when instantaneous values of the carried traffic in the grid element (122) including the user plane base station ($104_1$-$104_5$) were below a predefined threshold for a predefined first time period, and when historic values of the carried traffic indicate that the instantaneous traffic will stay low for a predetermined second time period, and
the second condition is fulfilled when instantaneous values of the number of mobile users in the grid element (122) including the user plane base station ($104_1$-$104_5$) were below a predefined threshold for a predefined third time period, and when historic values of the number of mobile users indicate that the number of mobile users will stay low for a predefined fourth period of time.

5. The method of claim 4, wherein
instantaneous values are recorded during a predefined investigation interval, wherein the investigation interval is separated into a plurality of partitions, and wherein in each partition discrete samples indicating the carried traffic and the number of users for the coverage area ($106_1$-$106_5$) of the user plane base station ($104_1$-$104_5$) are measured, and
historic values are represented by measured samples indicating the carried traffic and the number of users for the coverage area ($106_1$-$106_5$) of the user plane base station ($104_1$-$104_5$), wherein measured samples for a predefined time period are stored, and wherein the measured samples are separated by a time period being equal to or larger than the investigation interval.

6. The method of one of claims 1 to 5, wherein
the carried traffic is determined based on the number of mobile users in a grid element (122) and connected to the control plane base station (100) and a measured data rate on each mobile user in the coverage area (102) of the control plane base station (100), and
the number of mobile users is determined based on the number of mobile users in a grid element (122) and being at least in idle state.

7. The method of one of claims 1 to 6, wherein turning off the user plane base station ($104_1$-$104_5$) comprises:

checking whether the first and second conditions are fulfilled;
when both, the first and second conditions are fulfilled, entering a denial state for offloading the existing traffic from the user plane base station ($104_1$-$104_5$) to be turned off; and
once the last mobile user has been disconnected from the user plane base station ($104_1$-$104_5$), turning off the user plane base station ($104_1$-$104_5$).

8. The method of claim 7, wherein in the denial state the user plane base station ($104_1$-$104_5$) to be switched off refuses connections from new mobile users and offloads the connected mobile users to other user plane base stations ($104_1$-$104_5$) or to the control plane base station (100).

9. The method of claim 8, wherein in the denial state a new mobile user is allowed to connect to the user plane base station ($104_1$-$104_5$) to be turned off in case the remaining user plane base stations ($104_1$-$104_5$) and/or the control base station are overloaded.

10. The method of one of claims 1 to 9, comprising:

turning on the user plane base station ($104_1$-$104_5$) when a third condition on the carried traffic in the grid element (122) including the user plane base station ($104_1$-$104_5$) or a fourth condition on the number of mobile users in the grid element (122) including the user plane base station ($104_1$-$104_5$) is fulfilled.

11. The method of claim 10, wherein

the third condition is fulfilled when the carried traffic, on the basis of the historic values, is predicted to increase to a level indicating that an additional user plane base station ($104_1$-$104_5$) is needed, and

the fourth condition is fulfilled when the number of mobile users, on the basis of the historic values, is predicted to increase to a level indicating that an unexpected traffic increase from idle users impacts the capacity in the coverage area (102) of the control plane base station (100).

12. The method of claim 10 or 11, wherein turning on the user plane base station ($104_1$-$104_5$) comprises:

checking that one of the third or fourth conditions is fulfilled, and

when one of the third or fourth conditions is fulfilled, triggering a user plane base station ($104_1$-$104_5$) turning on procedure so that after an activation time the user plane base station ($104_1$-$104_5$) is on and fully operational.

13. The method of one of claims 1 to 12, comprising:

obtaining geographical location updates from the mobile users in the coverage area (102) of the control plane base station (100),

wherein the updates are periodically sent by the mobile users or are requested by the control plane base station (100).

14. The method of one of claims 1 to 13, comprising:

signaling from the control plane base station (100) to the user plane base station ($104_1$-$104_5$) turn-on and turn-off signals, and

signaling from the user plane base station ($104_1$-$104_5$) to the control plane base station (100) an on-and-operational signal.

15. A computer system for performing, when running on a computer, a method of one of claims 1 to 14.

16. A wireless communication system, comprising:

a control plane base station (100) having a coverage area (102) including a plurality of user plane base stations ($104_1$-$104_5$) for serving one or more mobile users,

wherein the system is configured to control an operational state of a user plane base station ($104_1$-$104_5$) in accordance with a method of one of claims 1 to 14.

17. An apparatus (500) for controlling an operational state of a user plane base station ($104_1$-$104_5$) in a wireless communication system, wherein the wireless communication system comprises a control plane base station (100) having a coverage area (102) divided into a plurality of geographical grid elements (122), wherein one or more of the grid elements (122) include one or more of a plurality of user plane base stations ($104_1$-$104_5$), the apparatus comprising:

a database (500a) for storing for each of the plurality of grid elements (122) time-varying information regarding a carried traffic and a number of mobile users in the coverage area (102) of the control plane base station (100); and

a controller (500b) for determining on the basis of the time-varying information from the database (500a) whether for a user plane base station ($104_1$-$104_5$) a first condition on the carried traffic and a second condition on the number of mobile users is fulfilled, and for outputting a turn off signal to the user plane base station ($104_1$-$104_5$) when the first and second conditions are fulfilled.

18. A control plane base station (100) in a wireless communication system, the wireless communication system comprising the control plane base station (100), wherein

the control plane base station (100) comprises a coverage area (102) including a plurality of user plane base stations ($104_1$-$104_5$), and

the control plane base station (100) comprises an apparatus (500) of claim 17.

**19.** A control plane base station (100) in a wireless communication system, the wireless communication system comprising the control plane base station (100), wherein
the control plane base station (100) comprises a coverage area (102) including a plurality of user plane base stations (104$_1$-104$_5$),
the control plane base station (100) comprises a controller (100b) for controlling the operational state of a user plane base station (104$_1$-104$_5$) in accordance with the method of one of claims 1 to 14.

**20.** A user plane base station (104$_1$-104$_5$) in a wireless communication system, the wireless communication system comprising a control plane base station (100) having a coverage area (102) including a plurality of user plane base stations (104$_1$-104$_5$), wherein
the user plane base station (104$_1$-104$_5$) comprises an interface for receiving a signal controlling the operational state of the user plane base station (104$_1$-104$_5$) in accordance with the method of one of claims 1 to 14.

**FIG 1**

EP 2 787 775 A1

FIG 2

EP 2 787 775 A1

daily traffic load profile

FIG 3

FIG 4

FIG 5

macrocell can handle data traffic

FIG 6

EP 2 787 775 A1

```
         200                                    202

┌─────────────────────────────────┐  ┌─────────────────────────────────┐
│  Conditions on the Carried Traffic │  │  Conditions on the Number of Users │
│ (instantaneous values and historical values) │  │ (instantaneous values and historical values) │
└─────────────────────────────────┘  └─────────────────────────────────┘
```

FIG 7

EP 2 787 775 A1

212

214

| Forecast of the Carried Traffic | Forecast of the Number of Users |

216

218

ONE of the conditions is fulfilled?

no → Leave U-plane BS in OFF state

220

yes

Trigger U-plane BS ON mechanism

222

FIG 8

FIG 9

Division of the coverage area of the
C-plane BS in different geographical grid elements

Traffic values stored for each grid element
(instantaneous and history)

$\alpha_1$ $\alpha_2$ $\alpha_3$ $\alpha_4$ $\alpha_5$ $\alpha_6$

(b)

Number of users stored foe each grid element
(instantaneous and history)

$N_1$ $N_2$ $N_3$ $N_4$ $N_5$ $N_6$

(c)

(a)

FIG 10

EP 2 787 775 A1

# Instantaneous values

investigation interval T (e.g. T=30 min)

stored data sample (carried traffic or number of users)

$T_1$   $T_2$   $T_3$   short time interval   $T_{N-1}$   $T_N$
(e.g. 30 sec / 1 min)

(a)

# Historical values

weekly profile

mon   tue   wed   thu   fri   sat   sun

00:00   long time interval (e.g. 30 min / 1 h)   23:59
daily profile

(b)   stored data sample (carried traffic or number of users)

## FIG 11

Conditions on the **Carried Traffic** in the grid element of the U-plane BS:
- instantaneous traffic < **Low Traffic Threshold** for $t_{low,inst}$
- traffic **can be supported** in the **near future** without this U-plane BS

— 300

302

Conditions on the **Number of Users** in the grid element of the U-plane BS:
- current number of users < **Low Number of Users Threshold** for $t_{low,inst}$
- number of users is **going to stay low** in the **near future**

306

304 **BOTH** of these conditions are fulfilled? —no→ Leave U-plane BS in **ON** state

yes

Put U-plane BS in **DENIAL** state — 308

312

310 Last user disconnected from U-plane BS? —no→ Leave U-plane BS in **DENIAL** state

yes

Turn OFF U-plane BS — 314

**FIG 12**

400

402

| Predicted traffic increase in grid element of the U-plane BS | Predicted increase of the number of users in grid element of the U-plane BS |

404

406

ONE of these conditions is fulfilled?

no → Leave U-plane BS in OFF state

yes

Trigger U-plane BS ON mechanism — 408

Activation delay $t_{AD}$ has passed

U-plane BS ON and fully operational — 410

FIG 13

FIG 14

FIG 15

FIG 16

EP 2 787 775 A1

FIG 17

EP 2 787 775 A1

Europäisches
Patentamt

European
Patent Office

Office européen
des brevets

# EUROPEAN SEARCH REPORT

Application Number

EP 13 16 2021

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Herndrik Berndt: "Future Radio Access, M2M and Grand Societal Challenges", 4th International IEEE Workshop on Open NGN and IMS Testbeds (ONIT 2012) @ GLOBECOM 2012, 7 December 2012 (2012-12-07), pages 1-28, XP055076622, Retrieved from the Internet: URL:http://www.onit-ws.org/2012/presentations/Keynote2.pdf [retrieved on 2013-08-27] * page 12 * ----- | 1-3,6, 10-20 | INV. H04W52/02 |
| Y | US 2011/237257 A1 (SOLIMAN SAMIR S [US] ET AL) 29 September 2011 (2011-09-29) * paragraph [0031] * ----- | 1-3,6, 10-20 | |
| Y | US 2011/044284 A1 (VOLTOLINA ELENA [SE] ET AL) 24 February 2011 (2011-02-24) * paragraph [0057] * ----- | 1-3,6, 10-20 | |
| A | EP 2 387 265 A1 (ALCATEL LUCENT [FR]) 16 November 2011 (2011-11-16) * paragraph [0043] * ----- | 1-20 | TECHNICAL FIELDS SEARCHED (IPC) H04W |
| A | JP 2011 250255 A (NTT DOCOMO INC) 8 December 2011 (2011-12-08) * the whole document * ----- | 1-20 | |

The present search report has been drawn up for all claims

| Place of search | Date of completion of the search | Examiner |
|---|---|---|
| The Hague | 30 August 2013 | Hegeman, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 16 2021

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2013

| Patent document cited in search report | | Publication date | Patent family member(s) | | Publication date |
|---|---|---|---|---|---|
| US 2011237257 | A1 | 29-09-2011 | CN<br>EP<br>JP<br>US<br>WO | 102823298 A<br>2550826 A1<br>2013524571 A<br>2011237257 A1<br>2011119889 A1 | 12-12-2012<br>30-01-2013<br>17-06-2013<br>29-09-2011<br>29-09-2011 |
| US 2011044284 | A1 | 24-02-2011 | CN<br>EP<br>JP<br>US<br>WO | 102656915 A<br>2468027 A1<br>2013502820 A<br>2011044284 A1<br>2011021975 A1 | 05-09-2012<br>27-06-2012<br>24-01-2013<br>24-02-2011<br>24-02-2011 |
| EP 2387265 | A1 | 16-11-2011 | NONE | | |
| JP 2011250255 | A | 08-12-2011 | NONE | | |

EPO FORM P0459

For more details about this annex : see Official Journal of the European Patent Office, No. 12/82